# EUROPÄISCHE PATENTSCHRIFT

(11) **EP 2 672 870 B1**
(45) Veröffentlichungstag und Bekanntmachung des Hinweises auf die Patenterteilung: **31.12.2014**
(21) Anmeldenummer: 11703666.5
(22) Anmeldetag: 11.02.2011
(51) Int. Cl.: A47L 9/20

(54) **VERFAHREN ZUM ABREINIGEN EINES FILTERS EINES STAUBSAUGERS SOWIE STAUBSAUGER ZUR DURCHFÜHRUNG DES VERFAHRENS**
METHOD FOR CLEANING OF A FILTER OF A VACUUM CLEANER AND VACUUM CLEANER FOR CARRYING OUT SAID METHOD.
MÉTHODE POUR NETTOYER UN FILTRE D'UN ASPIRATEUR ET L'ASPIRATEUR POUR LA MISE EN PRATIQUE DE LA MÉTHODE.

(43) Veröffentlichungstag der Anmeldung: 18.12.2013
(73) Patentinhaber: Alfred Kärcher GmbH & Co. KG, 71364 Winnenden (DE)
(72) Erfinder: HENSEL, Maic, 71522 Backnang (DE); SCHOLL, Julien, 71336 Waiblingen (DE); FUCHS, Frank, 71277 Rutesheim (DE); ENGENHARDT, Ulrich, 70199 Stuttgart (DE); WIRBEL, Britt, 71332 Waiblingen (DE); KUNZ, Steffen, 71364 Winnenden (DE)
(74) Vertreter: Hoeger, Stellrecht & Partner Patentanwälte
(86) Internationale Anmeldenummer: PCT/EP2011/052039
(87) Internationale Veröffentlichungsnummer: WO 2012/107103

(56) Entgegenhaltungen:
- DE-A1-102005 017 568
- DE-A1-102005 017 702
- JP-A- 2008 061 900

## Beschreibung

Die Erfindung betrifft ein Verfahren zum Abreinigen mindestens eines Filters eines Staubsaugers, wobei der Staubsauger einen Saugeinlass und einen Schmutzsammelbehälter aufweist, der über das mindestens eine Filter und eine Absaugleitung mit einem Saugaggregat in Strömungsverbindung steht und von diesem mit Unterdruck beaufschlagbar ist, und wobei das mindestens eine Filter zur Abreinigung reinseitig über mindestens ein Fremdluftventil mit Fremdluft beaufschlagbar ist, das sich zur Abreinigung des mindestens einen Filters aus einer geschlossenen Ventilstellung in eine geöffnete Ventilstellung und wieder zurück in die geschlossene Ventilstellung bewegt.

Außerdem betrifft die Erfindung einen Staubsauger zur Durchführung des Verfahrens.

Ein Staubsauger der eingangs genannten Art umfasst einen Saugeinlass, an den in üblicher Weise beispielsweise ein Saugschlauch anschließbar ist. Der Saugeinlass steht mit dem Schmutzsammelbehälter in Strömungsverbindung. Es kann beispielsweise vorgesehen sein, dass der Saugeinlass unmittelbar in den Schmutzsammelbehälter einmündet oder über eine Einlassleitung mit diesem in Strömungsverbindung steht. Der Schmutzsammelbehälter wiederum kann vom Saugaggregat mit Unterdruck beaufschlagt werden. Hierzu steht der Schmutzsammelbehälter über mindestens ein Filter und eine Absaugleitung mit dem Saugaggregat in Strömungsverbindung. Durch die Beaufschlagung des Schmutzsammelbehälters mit Unterdruck kann eine Saugströmung ausgebildet werden, unter deren Wirkung schmutzbeladene Saugluft in den Schmutzsammelbehälter eingesaugt werden kann, die dann über das mindestens eine Filter und die Absaugleitung vom Saugaggregat an die Umgebung wieder abgegeben werden kann. Das mindestens eine Filter ist im Strömungsweg zwischen dem Schmutzsammelbehälter und dem Saugaggregat angeordnet, so dass sich mit der Saugströmung mitgeführte Feststoffpartikel an der dem Schmutzsammelbehälter zugewandten Seite des Filters abscheiden. Mit zunehmender Abscheidung von Feststoffpartikeln erhöht sich der Strömungswiderstand des Filters, so dass dieses nach einiger Zeit abgereinigt werden muss. Zur Abreinigung kann die dem Schmutzsammelbehälter abgewandte Reinseite des Filters mit Fremdluft beaufschlagt werden. Hierzu kann ein Fremdluftventil ausgehend aus einer geschlossenen Ventilstellung in eine geöffnete Ventilstellung und anschließend wieder zurück in die geschlossene Ventilstellung bewegt werden. Dies hat zur Folge, dass kurzzeitig Fremdluft in die Absaugleitung einströmen und die Reinseite des Filters beaufschlagen kann. Dies führt zu einer mechanischen Erschütterung des Filters, wobei zumindest ein Teil der einströmenden Fremdluft das Filter in Gegenstromrichtung, das heißt entgegen der während des normalen Saugbetriebs herrschenden Strömungsrichtung, durchströmt. Dies verstärkt den Abreinigungseffekt des Filters.

Staubsauger der eingangs genannten Art sind aus der WO 2008/014798 bekannt. Durch eine möglichst kurzzeitige Beaufschlagung des mindestens einen Filters mit Fremdluft kann eine Abreinigung des Filters erfolgen, ohne dass dies zu einer merklichen Unterbrechung des Saugbetriebs führt.

Aufgabe der vorliegenden Erfindung ist es, das Verfahren der eingangs genannten Art sowie einen Staubsauger zur Durchführung des Verfahrens derart weiterzubilden, dass das mindestens eine Filter besonders wirksam abgereinigt werden kann.

Diese Aufgabe wird bei einem Verfahren der gattungsgemäßen Art erfindungsgemäß dadurch gelöst, dass die Saugleistung des Saugaggregats vor einem Übergang des Fremdluftventils in die geöffnete Ventilstellung erhöht und später wieder reduziert wird.

Beim erfindungsgemäßen Verfahren kann die Saugleistung des Saugaggregates in Abhängigkeit von der Ventilstellung des Fremdluftventils verändert werden. Und zwar wird die Saugleistung des Saugaggregats erhöht, noch bevor das Fremdluftventil aus seiner geschlossenen Ventilstellung in seine geöffnete Ventilstellung übergeht. Dies hat zur Folge, dass der im Schmutzsammelbehälter herrschende Unterdruck erhöht wird, bevor Fremdluft in Gegenstromrichtung das mindestens eine Filter durchströmt und in den Schmutzsammelbehälter eindringt. Zum Zeitpunkt, in dem das Fremdluftventil aus seiner geschlossenen Ventilstellung in seine geöffnete Ventilstellung übergeht, herrscht somit im Schmutzsammelbehälter ein besonders großer Unterdruck. Dies hat zur Folge, dass die einströmende Fremdluft das mindestens eine Filter mechanisch stark erschüttert und zu einem großen Teil in Gegenstromrichtung durchströmt. Die Abreinigung des mindestens einen Filters kann dadurch gesteigert werden. Bevorzugt erfolgt frühestens zum Zeitpunkt, zu dem sich das Fremdluftventil aus der geschlossenen Ventilstellung in die geöffnete Ventilstellung bewegt, wieder eine Reduzierung der Saugleistung des Saugaggregats.

Eine Erhöhung der Saugleistung ist nicht unbedingt vor jeder Filterabreinigung erforderlich, es kann beispielsweise vorgesehen sein, dass die Saugleistung beispielsweise nur vor jedem zweiten oder jedem dritten oder allgemein jedem n-ten Übergang des Fremdluftventils in die geöffnete Ventilstellung erhöht wird, wobei n eine ganze Zahl größer 1 ist, wohingegen die Saugleistung des Saugaggregats ansonsten einen gleich bleibenden Wert einnimmt.

Es kann auch vorgesehen sein, dass die Saugleistung so lange erhöht bleibt, bis sich das Fremdluftventil mehrmals von der geschlossenen Ventilstellung über die geöffnete Ventilstellung wieder zurück in die geschlossene Ventilstellung bewegt hat. Bei einer derartigen Ausgestaltung wird die Saugleistung vor einem ersten Übergang des Fremdluftventils in die geöffnete Stellung erhöht und anschließend öffnet und schließt das Fremdluftventil mehrmals kurzzeitig hintereinander, die Öffnungszeit kann beispielsweise jeweils weniger als 0,5 Sekunden betragen. Während der mehrmaligen Öffnungs- und Schließbewegung des Fremdluftventils kann die Saugleistung des Saugaggregats erhöht sein.

Eine besonders wirksame Filterabreinigung wird bei einer vorteilhaften Ausführungsform des erfindungsgemäßen Verfahrens dadurch erzielt, dass die Saugleistung des Saugaggregates vor jedem Übergang des Fremdluftventils in seine geöffnete Ventilstellung erhöht und später wieder reduziert wird. Somit liegt bei jedem Öffnen des Fremdluftventils ein besonders großer Unterdruck im Schmutzsammelbehälter vor und die eindringende Fremdluft kann das mindestens eine Filter mechanisch besonders stark erschüttern und zu einem Großteil das mindestens eine Filter in Gegenstromrichtung durchströmen.

Für eine besonders wirksame Filterabreinigung ist es gemäß der Erfindung von Bedeutung, dass beim Übergang des Fremdluftventils aus der geschlossenen Ventilstellung in die geöffnete Ventilstellung durch eine Änderung der Saugleistung des Saugaggregats ein möglichst hoher Unterdruck im Schmutzsammelbehälter vorliegt. Dies wird günstigerweise dadurch erzielt, dass beim Übergang des Fremdluftventils in die geöffnete Ventilstellung die Saugleistung des Saugaggregats erhöht ist. Während des Zeitintervalls, in dem das Fremdluftventil eine geöffnete Ventilstellung einnimmt, kann die Saugleistung des Saugaggregates bereits wieder reduziert werden.

Von besonderem Vorteil ist es jedoch, wenn die Saugleistung des Saugaggregates während des gesamten Zeitintervalls, in dem das Fremdluftventil offen ist, erhöht bleibt. Dies ermöglicht es, die mit dem Einströmen der Fremdluft in den Schmutzsammelbehälter einhergehende Druckerhöhung möglichst gering zu halten. Dies wiederum hat den Vorteil, dass der Saugbetrieb des Staubsaugers während der Filterabreinigung für den Benutzer nicht merklich unterbrochen wird.

Bevorzugt wird die Saugleistung des Saugaggregates frühestens mit einem Übergang des Fremdluftventils in die geschlossene Ventilstellung wieder reduziert. Es kann auch vorgesehen sein, dass die Saugleistung auch nach dem Übergang des Fremdluftventils in die geschlossene Ventilstellung noch kurzzeitig erhöht bleibt, so dass in den Schmutzsammelbehälter eingeströmte Fremdluft mit erhöhter Saugleistung abgesaugt werden kann.

Die Saugleistung des Saugaggregates wird vor einem Übergang des Fremdluftventils in die geöffnete Ventilstellung vorzugsweise um mindestens 10 % erhöht, insbesondere um mindestens 30 %.

Bei einer bevorzugten Ausführungsform des erfindungsgemäßen Verfahrens wird zur Erhöhung der Saugleistung des Saugaggregates die dem Saugaggregat bereitgestellte Versorgungsenergie erhöht. Das Saugaggregat kann beispielsweise einen Elektromotor aufweisen und ein Gebläse, das vom Elektromotor drehend angetrieben wird. Zur Erhöhung der Saugleistung kann die dem Elektromotor bereitgestellte elektrische Energie erhöht werden.

Besonders günstig ist es, wenn zur Erhöhung der Saugleistung des Saugaggregates die dem Saugaggregat bereitgestellte Versorgungsspannung erhöht wird, das heißt es wird die Versorgungsspannung des Elektromotors des Saugaggregates gesteigert.

Die Saugleistung des Saugaggregates wird vorzugsweise elektronisch gesteuert.

Günstigerweise wird die Abreinigung des mindestens einen Filters manuell, zeitabhängig oder in Abhängigkeit eines Sensorsignals ausgelöst. Es kann beispielsweise vorgesehen sein, dass in regelmäßigen oder unregelmäßigen zeitlichen Abständen selbsttätig eine Abreinigung des Filters durchgeführt wird, wobei die Saugleistung des Saugaggregates vor einem Übergang des Fremdluftventils in die geöffnete Stellung erhöht und später wieder reduziert wird. Hierbei kann vorgesehen sein, dass das Fremdluftventil in kurzen zeitlichen Abständen mehrmals hintereinander geöffnet und geschlossen wird, so dass stoßweise Fremdluft in die Absaugleitung einströmen und das mindestens eine Filter reinseitig beaufschlagen kann. Anschließend kann das Fremdluftventil seine geschlossene Ventilstellung beibehalten, bis zu einem späteren Zeitpunkt erneut ein Abreinigungsvorgang durchgeführt wird, bei dem das Fremdluftventil wieder mehrmals kurzzeitig hintereinander geöffnet und geschlossen wird. Während des gesamten Abreinigungsvorgangs kann die Saugleistung des Saugaggregats einen erhöhten Wert einnehmen. Besonders vorteilhaft ist es jedoch, wenn vor jedem Übergang des Fremdluftventils in die geöffnete Ventilstellung die Saugleistung des Saugaggregates erhöht wird und diese dann allenfalls so lange erhöht bleibt, bis das Fremdluftventil wieder seine geschlossene Stellung einnimmt. Somit wird die Saugleistung des Saugaggregats entsprechend der Öffnungs- und Schließbewegung des Fremdluftventils variiert, wobei sie jeweils erhöht wird, noch bevor das Fremdluftventil in die geöffnete Ventilstellung übergeht.

Es kann ergänzend oder alternativ auch vorgesehen sein, dass die Abreinigung des Filters manuell ausgelöst wird. Dies gibt dem Benutzer die Möglichkeit, eine Filterabreinigung dann durchzuführen, wenn er dies für erforderlich hält. Wird die Filterabreinigung manuell ausgelöst, so wird zunächst die Saugleistung des Saugaggregates erhöht und erst danach wird das Fremdluftventil kurzzeitig einmal oder mehrmals hintereinander geöffnet und wieder geschlossen, wobei die Saugleistung des Saugaggregats entsprechend der Bewegung des Fremdluftventils variiert werden kann. Zur manuellen Auslösung der Abreinigung kann der Staubsauger ein vom Benutzer betätigbares Bedienelement umfassen, beispielsweise einen Schalter oder einen Taster.

Es kann ergänzend oder alternativ auch vorgesehen sein, dass die Abreinigung des mindestens einen Filters in Abhängigkeit von einem Sensorsignal ausgelöst wird. Beispielsweise kann der in der Absaugleitung herrschende Druck gemessen werden. Erhöht sich aufgrund zunehmender Abscheidung von Feststoffpartikeln der Strömungswiderstand des mindestens einen Filters, so hat dies eine Druckabsenkung in der Absaugleitung zur Folge. Unterschreitet der in der Absaugleitung herrschende Unterdruck einen vorgegebenen Wert, so kann eine Filterabreinigung ausgelöst werden.

Es kann auch vorgesehen sein, dass mittels Sensoren das Betriebsgeräusch und/oder die Drehzahl des Saugaggregats erfasst werden. Bei einer Druckabsenkung in der Absaugleitung aufgrund einer Verstopfung des Filters erhöht sich die Drehzahl des Saugaggregats und dessen Betriebsgeräusch verändert sich, so dass bei Überschreiten einer vorgegebenen Drehzahl oder bei Vorliegen eines vorgegebenen Betriebsgeräusches, beispielsweise bei Vorliegen einer bestimmten Lautstärke, eine Filterabreinigung aktiviert werden kann.

Es kann auch mindestens ein Strömungssensor zum Einsatz kommen, der die in der Absaugleitung herrschende Saugströmung erfasst, beispielsweise die Strömungsgeschwindigkeit und/oder den Volumenstrom. Bei Unterschreiten eines vorgegebenen Wertes kann dann eine Filterabreinigung in Gang gesetzt werden.

Besonders vorteilhaft ist es, wenn mit Hilfe von Sensoren der am Filter herrschende Druckabfall ermittelt wird. Hierzu können stromaufwärts und stromabwärts des mindestens einen Filters Drucksensoren angeordnet sein, so dass die Differenz der stromaufwärts und stromabwärts des mindestens einen Filters herrschenden Drücke erfasst werden kann. Überschreitet der Differenzdruck einen vorgegebenen Wert, so kann ebenfalls eine Filterabreinigung ausgelöst werden.

Es kann vorgesehen sein, dass zusätzlich zu einer zeitgesteuerten und/oder sensorgesteuerten Auslösung einer Filterabreinigung eine manuelle Auslösung derselben möglich ist. Dies erlaubt es dem Benutzer, unabhängig von Sensorsignalen und zeitgesteuerten Filterabreinigungen bei Bedarf manuell eine Filterabreinigung auszulösen.

Bei einer besonders bevorzugten Ausführungsform des erfindungsgemäßen Verfahrens wird dem Saugaggregat zumindest zeitweise Versorgungsenergie aus mindestens einer wiederaufladbaren Batterie bereitgestellt. Während des Betriebs des Staubsaugers entlädt sich die mindestens eine Batterie allmählich. Um die Entladungszeit möglichst zu verlängern, ist es günstig, wenn das Saugaggregat während des normalen Saugbetriebs möglichst wenig Energie verbraucht. Zur Steigerung der Abreinigungswirkung wird die dem Saugaggregat zur Verfügung gestellte Versorgungsenergie vor einem Übergang des Fremdluftventils in die geöffnete Ventilstellung erhöht und später wird die Versorgungsenergie wieder reduziert. Somit weist das Saugaggregat nur dann einen verhältnismäßig hohen Energieverbrauch auf, wenn das mindestens eine Filter abgereinigt wird. Die Einsatzzeit des batteriebetriebenen Staubsaugers kann dadurch verlängert werden. Die erhöhte Versorgungsenergie kann dem Saugaggregat von einer Batterie zur Verfügung gestellt werden. Es kann aber auch ein zusätzlicher Ladungsspeicher zum Einsatz kommen, der in Ergänzung zu einer Batterie verwendet wird, um die Versorgungsenergie des Saugaggregates für eine Filterabreinigung zu steigern. Als zusätzlicher Ladungsspeicher kann insbesondere ein Kondensator zum Einsatz kommen, vorzugsweise ein Doppelschichtkondensator. Der Kondensator kann während des normalen Saugbetriebs allmählich aufgeladen werden, wobei die Amplitude des Ladestroms verhältnismäßig gering gewählt werden kann, so dass bei einem Batteriebetrieb die Batterie durch den Ladevorgang des Kondensators nur wenig belastet wird. Zur Filterabreinigung kann der Kondensator innerhalb kurzer Zeit entladen werden, wobei er dem Saugaggregat Energie zur Steigerung der Saugleistung zur Verfügung stellt.

Es kann vorgesehen sein, dass der Staubsauger wahlweise von einer mitgeführten wiederaufladbaren Batterie oder über ein an eine Netzspannung anschließbares Versorgungskabel mit Energie versorgt werden kann. Eine Veränderung der Saugleistung des Saugaggregates bei der Filterabreinigung erfolgt vorzugsweise nur bei Batteriebetrieb, wohingegen bei Netzbetrieb des Staubsaugers die Saugleistung des Saugaggregates bei der Filterabreinigung konstant gehalten wird.

Wie eingangs erwähnt, betrifft die Erfindung auch einen Staubsauger zur Durchführung des voranstehenden Verfahrens. Der Staubsauger umfasst einen Saugeinlass und einen Schmutzsammelbehälter, der über mindestens ein Filter und eine Absaugleitung mit einem Saugaggregat in Strömungsverbindung steht und vom Saugaggregat mit Unterdruck beaufschlagbar ist, wobei das mindestens eine Filter zur Abreinigung reinseitig über mindestens ein Fremdluftventil mit Fremdluft beaufschlagbar ist, das zur Abreinigung des mindestens einen Filters aus einer geschlossenen Ventilstellung in eine geöffnete Ventilstellung und wieder zurück in seine geschlossene Ventilstellung bewegbar ist.

Bei einem solchen Staubsauger wird die eingangs genannte Aufgabe erfindungsgemäß dadurch gelöst, dass die Saugleistung des Saugaggregats vor einem Übergang des Fremdluftventils in die geöffnete Ventilstellung steigerbar und später wieder reduzierbar ist. Beim erfindungsgemäßen Staubsauger kann also die Saugleistung in Abhängigkeit von der Ventilstellung des Fremdluftventils variiert werden. Vor einem Übergang des Fremdluftventils in die geöffnete Ventilstellung kann die Saugleistung des Saugaggregates gesteigert werden, so dass sich vor dem Öffnen des Fremdluftventils im Schmutzsammelbehälter ein erhöhter Unterdruck ausbildet und dadurch eine besonders wirkungsvolle Filterabreinigung durch die anschließend einströmende Fremdluft erzielt werden kann. Zu einem späteren Zeitpunkt kann die Saugleistung des Saugaggregates wieder reduziert werden, so dass die Saugleistung des Saugaggregates während des normalen Saugbetriebs einen geringeren Wert einnehmen kann als zu Beginn und vorzugsweise während einer Filterabreinigung. Günstigerweise ist die Saugleistung des Saugaggregats frühestens zu dem Zeitpunkt wieder reduzierbar, zu dem das Fremdluftventil in die geöffnete Ventilstellung bewegbar ist.

Wie bereits erläutert, kann vorgesehen sein, dass die Saugleistung des Saugaggregates nicht vor jedem Übergang des Fremdluftventils in die geöffnete Ventilstellung steigerbar ist sondern nur bei jedem zweiten, dritten oder n-ten Übergang des Fremdluftventils in die geöffnete Ventilstellung, wobei n eine ganze Zahl größer 1 ist.

Es kann auch vorgesehen sein, dass die Saugleistung des Saugaggregats während mehrerer aufeinander folgenden Bewegungen des Fremdluftventils von der geschlossenen Ventilstellung über die geöffnete Ventilstellung wieder zurück in die geschlossene Ventilstellung auf einem erhöhten Wert haltbar ist. Von besonderem Vorteil ist es, wenn die Saugleistung des Saugaggregates vor jedem Übergang des Fremdluftventils in seine geöffnete Ventilstellung steigerbar und später wieder reduzierbar ist.

Vorzugsweise ist die Saugleistung des Saugaggregates während des Zeitintervalls, in dem sich das Fremdluftventil aus der geschlossenen Ventilstellung über die geöffnete Ventilstellung zurück in die geschlossene Ventilstellung bewegt, erhöht. Bei einer derartigen Ausgestaltung des erfindungsgemäßen Staubsaugers kann die Saugleistung des Saugaggregates während der gesamten Bewegungszeit des Fremdluftventils ausgehend von der geschlossenen Ventilstellung über die geöffnete Ventilstellung zurück in die geschlossene Ventilstellung einen hohen Wert einnehmen, wohingegen die Saugleistung des Saugaggregates während des normalen Saugbetriebes des Staubsaugers einen geringeren Wert aufweist.

Günstigerweise ist die Saugleistung des Saugaggregats frühestens mit einem Übergang des Fremdluftventils in die geschlossene Ventilstellung reduzierbar. Es kann auch vorgesehen sein, dass die Saugleistung nach einer vorangehenden Erhöhung erst dann wieder reduzierbar ist, nachdem das Fremdluftventil bereits seine geschlossene Ventilstellung eingenommen hat.

Die Saugleistung des Saugaggregates ist vorzugsweise um mindestens 10 % steigerbar, insbesondere um mindestens 30 %.

Es kann vorgesehen sein, dass zur Erhöhung der Saugleistung des Saugaggregates die dem Saugaggregat bereitgestellte Versorgungsenergie steigerbar ist, insbesondere die einem Elektromotor des Saugaggregates bereitgestellte elektrische Versorgungsenergie.

Günstig ist es, wenn zur Erhöhung der Saugleistung des Saugaggregates die dem Saugaggregat bereitgestellte Versorgungsspannung steigerbar ist. Es kann beispielsweise vorgesehen sein, dass das Saugaggregat einen Elektromotor aufweist, dessen Versorgungsspannung zur Erhöhung des Saugleistung des Saugaggregates steigerbar ist.

Bei einer bevorzugten Ausführungsform weist der erfindungsgemäße Staubsauger eine elektronische Steuereinrichtung auf zur Steuerung der Saugleistung des Saugaggregates. Die elektronische Steuereinrichtung kann eine Schaltungsanordnung mit einem Mikrocontroller umfassen.

Günstigerweise ist die Saugleistung des Saugaggregats von der Steuereinrichtung in Abhängigkeit von der Ventilstellung des Fremdluftventils steuerbar.

Von Vorteil ist es, wenn der Staubsauger einen elektronisch steuerbaren Hochsetzsteller umfasst zur Steigerung der Versorgungsspannung des Saugaggregates. Elektronisch steuerbare Hochsetzsteller sind dem Fachmann an sich bekannt. Mit ihrer Hilfe kann eine Gleichspannung oder eine Wechselspannung auf ein höheres Niveau transferiert werden in Abhängigkeit von einem Steuersignal. Derartige Hochsetzsteller werden häufig auch als "Booster" bezeichnet.

Wie bereits erwähnt, ist es von Vorteil, wenn die Abreinigung des mindestens einen Filters manuell, zeitgesteuert oder sensorgesteuert auslösbar ist. So kann beispielsweise vorgesehen sein, dass der erfindungsgemäße Staubsauger ein manuell betätigbares Bedienelement zur Auslösung einer Filterabreinigung aufweist. Alternativ oder ergänzend kann vorgesehen sein, dass die Filterabreinigung zeitgesteuert erfolgt. Der Staubsauger kann hierzu eine Steuereinrichtung umfassen, die in zeitlichen Abständen selbsttätig eine Filterabreinigung auslöst, wobei das Fremdluftventil mindestens einmal, günstigerweise mehrmals kurz hintereinander, geöffnet und geschlossen wird. Alternativ oder ergänzend kann vorgesehen sein, dass der Staubsauger mindestens einen Sensor aufweist, der ein Sensorsignal zur Auslösung einer Filterabreinigung bereitstellt. Insbesondere kann ein Drucksensor zum Einsatz kommen, mit dessen Hilfe der in der Absaugleitung herrschende Druck erfassbar ist. Von besonderem Vorteil ist es, wenn der erfindungsgemäße Staubsauger stromaufwärts und stromabwärts des mindestens einen Filters angeordnete Drucksensoren aufweist, so dass die an dem mindestens einen Filter herrschende Druckdifferenz erfassbar und in Abhängigkeit von der Druckdifferenz eine Filterabreinigung auslösbar ist. Alternativ oder ergänzend kann der Staubsauger mindestens einen Strömungssensor aufweisen, der vorzugsweise in der Absaugleitung angeordnet ist, und/oder einen Drehzahlsensor und/oder einen Geräuschsensor.

Günstigerweise umfasst der erfindungsgemäße Staubsauger mindestens eine wiederaufladbare Batterie. Dies erlaubt es, den Staubsauger unabhängig von der Erreichbarkeit einer Netzspannung betreiben zu können. Um den Energieverbrauch des Staubsaugers gering zu halten und dennoch eine besonders wirkungsvolle Filterabreinigung zu erzielen, nimmt die Saugleistung des Saugaggregates während des normalen Saugbetriebs einen ersten Wert ein, der vor einem Übergang des Fremdluftventils in die geöffnete Ventilstellung auf einen zweiten Wert gesteigert wird, wobei spätestens nach erfolgter Filterabreinigung die Saugleistung des Saugaggregates wieder auf den ersten Wert reduziert wird.

Günstig ist es, wenn der Staubsauger mindestens einen Ladungsspeicher, insbesondere einen Kondensator, vorzugsweise mindestens einen Doppelschichtkondensator, umfasst, der während des normalen Saugbetriebs geladen werden kann und der zur Steigerung der Saugleistung kurzzeitig über das Saugaggregat entladen werden kann.

Bevorzugt umfasst der Staubsauger mindestens eine wiederaufladbare Batterie zur Energieversorgung des Saugaggregats, und zusätzlich umfasst der Staubsauger mindestens einen Doppelschichtkondensator zur Steigerung der Versorgungsenergie des Saugaggregats für eine Filterabreinigung.

Von besonderem Vorteil ist es, wenn der Staubsauger zusätzlich zu mindestens einer wiederaufladbaren Batterie ein Versorgungskabel aufweist zum Anschluss an eine Netzspannung.

Bevorzugt ist die Saugleistung des Saugaggregates nur bei einem Batteriebetrieb des Staubsaugers in Abhängigkeit von der Ventilstellung des Fremdluftventils veränderbar. Bei einer derartigen Ausgestaltung des Staubsaugers ist die Saugleistung während eines Netzbetriebs unabhängig von der Ventilstellung des Fremdluftventils, wohingegen bei einem Batteriebetrieb die Saugleistung in Abhängigkeit von der Ventilstellung des Fremdluftventils variiert wird, um dadurch die Einsatzzeit des Staubsaugers bei einem Batteriebetrieb zu verlängern.

Die nachfolgende Beschreibung einer bevorzugten Ausführungsform der Erfindung dient im Zusammenhang mit der Zeichnung der näheren Erläuterung. Es zeigen:
- Figur 1:: eine schematische Schnittansicht eines erfindungsgemäßen Staubsaugers;
- Figur 2:: eine vergrößerte Darstellung eines Fremdluftventils des Staubsaugers aus Figur 1;
- Figur 3:: ein Blockschaltbild der elektrischen Steuerung des Staubsaugers aus Figur 1;
- Figur 4:: eine Veranschaulichung des zeitlichen Verlaufs eines Steuersignals einer Steuereinrichtung des Staubsaugers aus Figur 1 zur Steuerung einer Filterabreinigung;
- Figur 5:: eine Veranschaulichung des zeitlichen Verlaufs eines Steuersignals der Steuereinrichtung des Staubsaugers aus Figur 1 zur Steuerung eines Hochsetzstellers, und
- Figur 6:: eine Veranschaulichung des zeitlichen Verlaufs einer Versorgungsspannung eines Saugaggregates des Staubsaugers aus Figur 1.

In der Zeichnung ist schematisch ein Staubsauger 10 dargestellt mit einem Schmutzsammelbehälter 12, auf den ein Saugkopf 14 aufgesetzt ist. Der Schmutzsammelbehälter 12 weist einen Saugeinlass 16 auf, an den in üblicher Weise ein Saugschlauch 18 angeschlossen werden kann. Der Saugkopf 14 dichtet den Schmutzsammelbehälter 12 oberseitig ab und bildet einen Saugauslass 20 aus, an dem ein Filter 22 gehalten ist. An das Filter 22 schließt sich eine Absaugleitung 24 an, über die der Schmutzsammelbehälter 12 mit einem Saugaggregat 26 in Strömungsverbindung steht. Das Saugaggregat 26 umfasst einen Elektromotor 27 und ein vom Elektromotor 27 drehend angetriebenes Gebläse 28.

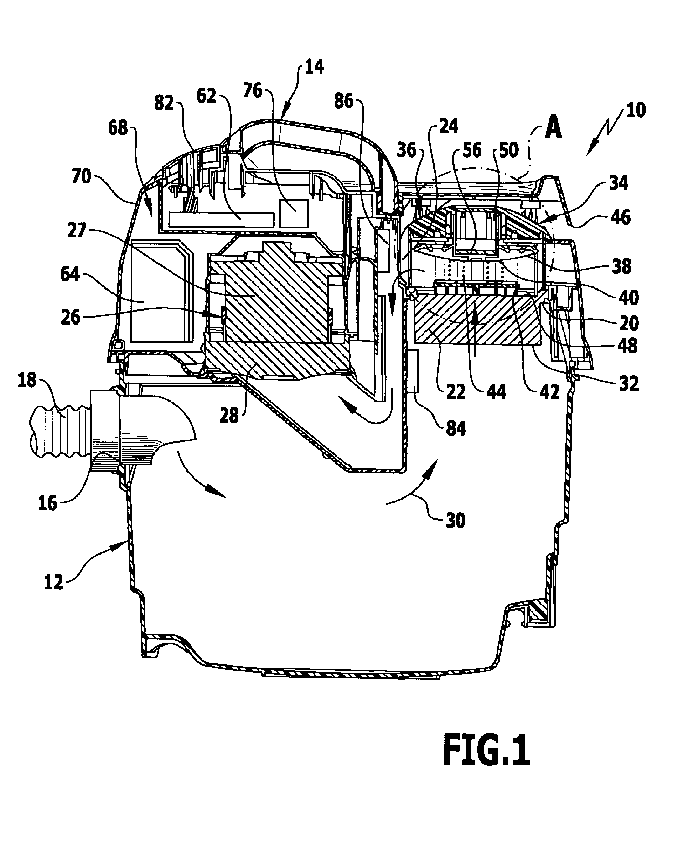

Der Schmutzsammelbehälter 12 kann vom Saugaggregat 26 mit Unterdruck beaufschlagt werden, so dass sich eine in Figur 1 durch die Pfeile 30 dargestellte Saugströmung ausbildet. Unter der Wirkung der Saugströmung 30 kann mit Schmutz beladene Saugluft über den Saugeinlass 16 in den Schmutzsammelbehälter 12 eingesaugt werden, die dann vom Saugaggregat 26 abgesaugt werden kann. Die Saugluft kann vom Saugaggregat 26 über in der Zeichnung nicht dargestellte, dem Fachmann an sich bekannte Abluftöffnungen des Saugkopfes 14 an die Umgebung abgegeben werden.

Die Saugluft durchströmt das Filter 22, so dass sich mitgeführte Feststoffpartikel auf der dem Schmutzsammelbehälter 12 zugewandten Schmutzseite 32 des Filters 22 ablagern. Es ist deshalb erforderlich, das Filter 22 von Zeit zu Zeit abzureinigen, da es ansonsten einen zunehmenden Strömungswiderstand ausbildet, so dass die Saugwirkung des Staubsaugers 10 beeinträchtigt wird.

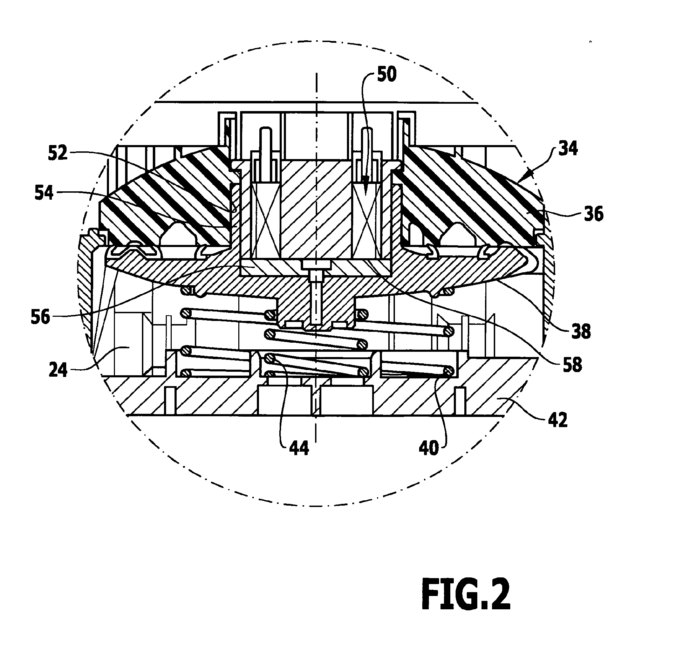

Zur Abreinigung des Filters 22 ist oberhalb des Filters 22 im Saugkopf 14 ein Fremdluftventil 34 angeordnet, das in Figur 2 vergrößert dargestellt ist. Es umfasst eine ortsfest im Saugkopf 14 angeordnete Ventilhalterung 36, die einen Ventilsitz ausbildet für einen beweglichen Ventilkörper in Form eines Ventiltellers 38. Der Ventilteller 38 ist mittels einer Schließfeder 40 mit einer Schließkraft in Richtung auf die Ventilhalterung 36 beaufschlagt. Die Schließfeder 40 ist zwischen einer plattenartigen, eine Vielzahl von Strömungsdurchlässen aufweisenden, ortsfest im Saugkopf 14 angeordneten Filterhalterung 42 und dem Ventilteller 38 eingespannt. Zusätzlich zur Schließfeder 40 trägt die Filterhalterung 42 ein federndes Anschlagelement in Form einer Anschlagfeder 44, die ebenso wie die Schließfeder 40 eine lineare Kennlinie aufweist und als Schraubenfeder ausgebildet ist. Im Gegensatz zur Schließfeder 40 steht die Anschlagfeder 44 in der Schließstellung des Ventiltellers 38 nicht unter Vorspannung. Erst wenn sich der Ventilteller 38 vom Ventilsitz der Ventilhalterung 36 abhebt, gelangt die Anschlagfeder 44 an der Unterseite des Ventiltellers 38 zur Anlage und wird bei einer weiteren Bewegung des Ventiltellers 38 etwas zusammengedrückt. Sie übt dadurch eine zunehmende Rückstellkraft auf den Ventilteller 38 aus und beschleunigt die Bewegung des Ventiltellers 38 ausgehend von seiner in Figur 2 dargestellten geschlossenen Ventilstellung über eine geöffnete Ventilstellung wieder zurück in die geschlossene Ventilstellung. In der geöffneten Ventilstellung nimmt der Ventilteller 38 einen Abstand zu der Ventilhalterung 36 ein, die den Ventilsitz ausbildet.

Die Ventilhalterung 36 weist eine Vielzahl von in der Zeichnung nicht dargestellten Durchgangsöffnungen auf, deren Mündungsbereiche vom Ventilteller 38 verschlossen werden, wenn dieser seine geschlossene Ventilstellung einnimmt. In Höhe der Ventilhalterung 36 weist der Saugkopf 14 eine seitliche Öffnung 46 auf. Über die seitliche Öffnung 46 kann Fremdluft in die Durchgangsöffnungen der Ventilhalterung 36 einströmen. Nimmt der Ventilteller 36 seine zur Ventilhalterung 36 beabstandete offene Ventilstellung ein, so steht die seitliche Öffnung 46 über die Durchgangsöffnungen der Ventilhalterung 36 mit der Absaugleitung 24 in Strömungsverbindung und Fremdluft kann die dem Schmutzsammelbehälter 12 abgewandte Reinseite 48 des Filters 22 beaufschlagen. Nimmt der Ventilteller 38 seine geschlossene Ventilstellung ein, so ist die Strömungsverbindung zwischen der seitlichen Öffnung 46 und der Absaugleitung 24 unterbrochen.

In einem zentralen Bereich trägt die Ventilhalterung 36 einen Elektromagneten 50. In Umfangsrichtung ist der Elektromagnet 50 von einem Ringraum 52 umgeben, in den eine oberseitig an den Ventilteller 38 angeformte Führungshülse 54 eintaucht. Die Führungshülse 54 nimmt ein magnetisierbares Element in Form einer Eisenplatte 56 auf, die in der geschlossenen Ventilstellung des Ventiltellers 38 an einer freien Stirnkante 58 des Elektromagneten 50 anliegt und in Kombination mit dem Elektromagneten 50 einen geschlossenen Magnetkreis ausbildet.

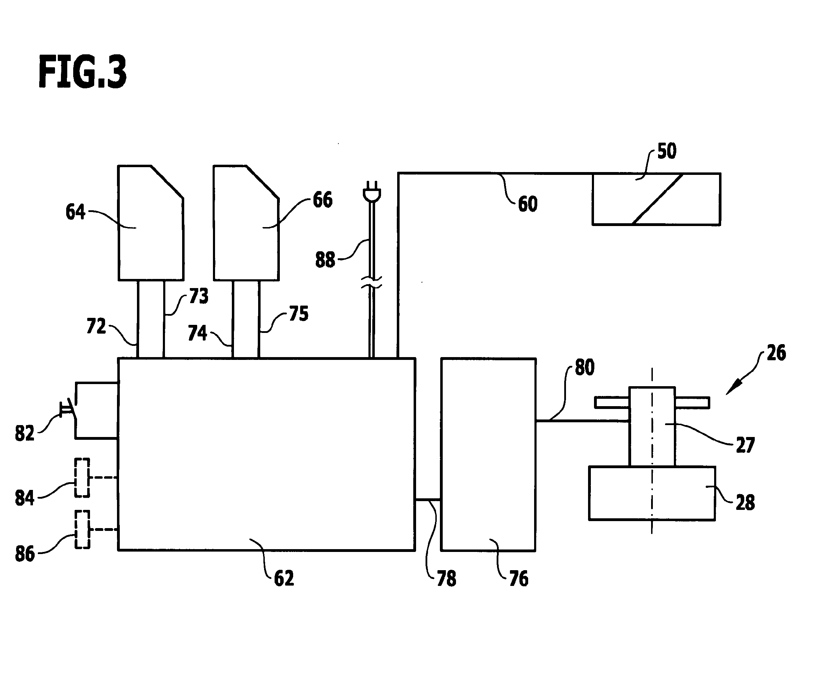

Der Elektromagnet 50 steht über eine in Figur 3 schematisch dargestellte Stromversorgungsleitung 60 mit einer im Saugkopf 14 angeordneten elektronischen Steuereinrichtung 62 in elektrischer Verbindung. Von der Steuereinrichtung 62 wird der Elektromagnet 50 während des normalen Saugbetriebs des Staubsaugers 10 mit einem Versorgungsstrom beaufschlagt, dies wird nachfolgend noch näher erläutert, und aufgrund des sich ausbildenden Magnetfelds wird der Ventilteller 38 zuverlässig in seiner Schließstellung gehalten. Die Haltekraft des Elektromagneten 50 wird von der Federkraft der Schließfeder 40 unterstützt.

Wird die Stromversorgung des Elektromagneten 50 von der Steuereinrichtung 62 unterbrochen, so entfällt die auf den Ventilteller 38 einwirkende magnetische Haltekraft und der Ventilteller 38 wird aufgrund der auf ihn einwirkenden Druckdifferenz, die sich aus dem Außendruck der im Bereich der Ventilhalterung 36 vorliegenden Fremdluft und dem Innendruck innerhalb der Absaugleitung 24 ergibt, entgegen der Wirkung der Schließfeder 40 vom Ventilsitz abgehoben. Fremdluft kann dann schlagartig durch die Durchgangsöffnungen der Ventilhalterung 36 hindurch in die Absaugleitung 24 einströmen und das Filter 22 wird auf seiner Reinseite 48 schlagartig mit Fremdluft beaufschlagt. Dies führt zu einer mechanischen Erschütterung des Filters 22. Außerdem wird das Filter 22 in Gegenstromrichtung, das heißt entgegen der während des normalen Saugbetriebs herrschenden Strömungsrichtung 30, von Fremdluft durchströmt. Dies hat eine wirkungsvolle Abreinigung des Filters 22 zur Folge.

Die Energieversorgung des Staubsaugers 10 erfolgt im dargestellten Ausführungsbeispiel mit Hilfe zweier wiederaufladbarer Batterien 64, 66, die seitlich neben dem Saugaggregat 26 in einem Batteriefach 68 des Saugkopfes 14 angeordnet sind. Das Batteriefach 68 ist über eine nach außen schwenkbare Klappe 70 dem Benutzer zum Auswechseln der Batterien 64, 66 zugänglich.

Die elektronische Steuereinrichtung 62 ist oberhalb des Saugaggregates 26 im Saugkopf 14 angeordnet und steht über Versorgungsleitungen 72, 73, 74, 75 mit den Batterien 64 und 66 in elektrischer Verbindung. Zusätzlich zur elektronischen Steuereinrichtung 62 nimmt der Saugkopf 14 oberhalb des Saugaggregates 26 einen elektronisch steuerbaren Hochsetzsteller 76 auf, der über eine Eingangsleitung 78 mit der Steuereinrichtung 62 und über eine Ausgangsleitung 80 mit dem Elektromotor 27 des Saugaggregates 26 in elektrischer Verbindung steht. Eingangsseitig ist an die Steuereinrichtung 62 ein vom Benutzer manuell betätigbarer Taster 82 angeschlossen, der an der Oberseite des Saugkopfes 14 angeordnet ist. Durch Betätigen des Tasters 82 kann der Benutzer eine Filterabreinigung auslösen.

Alternativ oder ergänzend kann vorgesehen sein, dass stromaufwärts des Filters 22 ein erster Drucksensor 84 und stromabwärts des Filters 22 ein zweiter Drucksensor 86 angeordnet sind, die an die Steuereinrichtung 62 angeschlossen sind und jeweils ein druckabhängiges Steuersignal bereitstellen. Mittels der beiden Drucksensoren 84 und 86 kann die sich am Filter 22 einstellende Druckdifferenz ermittelt werden. Je mehr Feststoffpartikel sich am Filter 22 abscheiden, desto größer ist der Strömungswiderstand des Filters 22 und desto größer ist auch die sich einstellende Druckdifferenz. Erreicht die Druckdifferenz einen vorgebbaren Wert, so kann die Steuereinrichtung 62 selbsttätig eine Filterabreinigung auslösen.

Alternativ oder ergänzend kann vorgesehen sein, dass die Steuereinrichtung 62 unabhängig von den herrschenden Druckverhältnissen und unabhängig von der möglichen Betätigung des Tasters 82 in gleich bleibenden oder unterschiedlichen Zeitabständen selbsttätig eine Filterabreinigung auslöst.

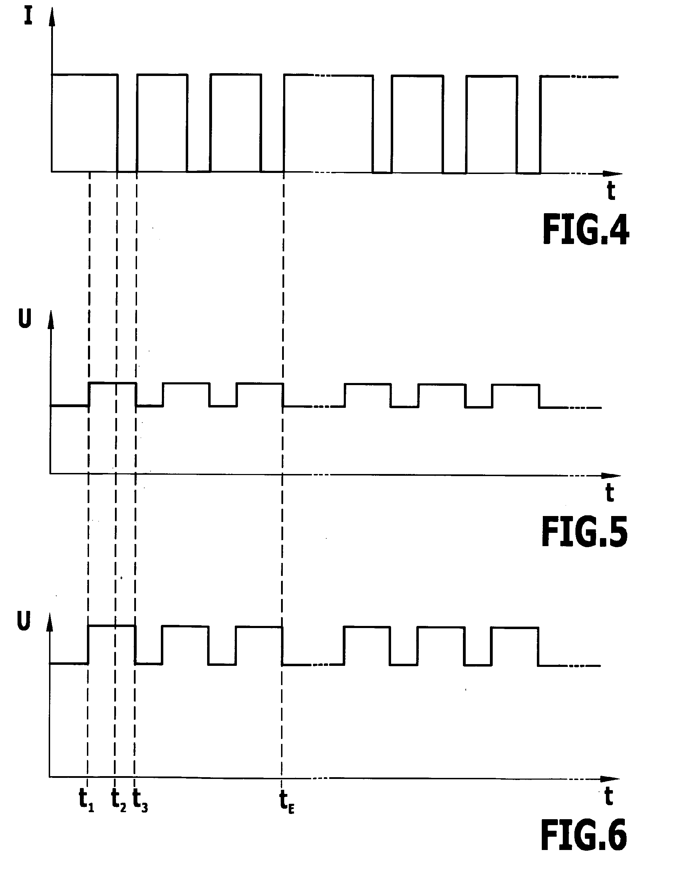

Wie bereits erwähnt, erfolgt eine Filterabreinigung dadurch, dass die Stromversorgung des Elektromagneten 50 von der Steuereinrichtung 62 kurzzeitig unterbrochen wird. Der zeitliche Verlauf des von der Steuereinrichtung 62 dem Elektromagneten 50 bereitgestellten Versorgungsstromes ist in Figur 4 veranschaulicht. Zu einem Zeitpunkt t₂ wird die Stromversorgung des Elektromagneten 50 unterbrochen, so dass das Fremdluftventil 34 ausgehend von seiner geschlossenen Ventilstellung in seine geöffnete Ventilstellung übergeht, und zu einem nachfolgenden Zeitpunkt t₃ wird die Stromversorgung des Elektromagneten 50 wieder bereitgestellt, so dass das Fremdluftventil 34 wieder seine geschlossene Ventilstellung einnimmt. Die Unterbrechung der Stromversorgung erfolgt im dargestellten Ausführungsbeispiel dreimal kurz hintereinander, so dass die Reinseite 48 des Filters 22 dreimal hintereinander schlagartig mit Fremdluft beaufschlagt wird, die zu einem großen Teil das Filter 22 in Gegenstromrichtung durchströmt. An der Schmutzseite 32 anhaftende Feststoffpartikel lösen sich dadurch ab. Mit dem Ende der dritten Stromunterbrechung, also zum Zeitpunkt t_{E}, ist der Abreinigungsvorgang beendet.

Ein kompletter Abreinigungsvorgang umfasst im dargestellten Ausführungsbeispiel also drei Öffnungs- und Schließbewegungen des Fremdluftventils kurz hintereinander. Die Länge des Zeitintervalls zwischen den Zeitpunkten t₂ und t₃ kann beispielsweise 90 Millisekunden betragen. Nach einem Abreinigungsvorgang stellt sich wieder der normale Saugbetrieb ein, in dem der Elektromagnet 50 von der Steuereinrichtung 62 mit dem Versorgungsstrom beaufschlagt wird und das Fremdluftventil 34 seine geschlossene Ventilstellung beibehält. Die Saugleistung des Saugaggregats 26 wird während des normalen Saugbetriebs konstant gehalten. Bei zeitgesteuerter Filterabreinigung erfolgt nach einem Saugbetrieb von beispielsweise 15 Sekunden erneut ein Abreinigungsvorgang mit dreimaliger schlagartiger Fremdluftzufuhr, wie dies voranstehend erläutert wurde. Die Länge des Zeitintervalls zwischen zwei Abreinigungsvorgängen ist bevorzugt manuell einstellbar. Alternativ oder ergänzend kann ein Abreinigungsvorgang manuell mittels des Tasters 82 und/oder sensorgesteuert mittels der Drucksensoren 84, 86 ausgelöst werden.

Figur 5 zeigt den zeitlichen Verlauf der von der Steuereinrichtung 62 dem elektronisch steuerbaren Hochsetzsteller 76 bereitgestellte Eingangsspannung, und in Figur 6 ist der zeitliche Verlauf der Ausgangsspannung des Hochsetzstellers 76 dargestellt, die dieser in Form einer Versorgungsspannung dem Elektromotor 27 bereitstellt. Wie sich aus den Figuren 5 und 6 ergibt, wird die Ausgangsspannung des Hochsetzstellers 76 und damit die Versorgungsspannung des Elektromotors 27 in Abhängigkeit vom Strom des Elektromagneten 50 und damit in Abhängigkeit von der Ventilstellung des Fremdluftventils 34 variiert. Und zwar wird die Versorgungsspannung des Elektromotors 27 zum Zeitpunkt t₁ erhöht, noch bevor der Versorgungsstrom des Elektromagneten 50 zum Zeitpunkt t₂ abfällt und dadurch das Fremdluftventil 34 ausgehend von seiner geschlossenen Ventilstellung schlagartig in seine geöffnete Ventilstellung übergeht. Die erhöhte Versorgungsspannung des Elektromotors 27 wird im dargestellten Ausführungsbeispiel so lange beibehalten, bis zum Zeitpunkt t₃ der Versorgungsstrom des Elektromagneten 50 wieder einsetzt und damit das Fremdluftventil 34 wieder seine geschlossene Ventilstellung einnimmt. Die erhöhte Versorgungsspannung des Elektromotors 27 hat zur Folge, dass die Saugleistung des Saugaggregates 26 erhöht wird, da sich aufgrund der erhöhten Versorgungsspannung des Elektromotors 27 die Drehzahl des Gebläses 28 erhöht. Die Dauer des Zeitintervalls zwischen den Zeitpunkten t₁ und t₂ kann beispielsweise 0,5 Sekunden bis 1,5 Sekunden betragen.

Wie aus den Figuren 5 und 6 unmittelbar deutlich wird, wird vor jeder Unterbrechung des Versorgungsstroms des Elektromagneten 50 die Versorgungsspannung des Elektromotors 27 erhöht, und mit jedem erneuten Einsetzen des Versorgungsstroms des Elektromagneten 50 wird die Versorgungsspannung des Elektromotors 27 wieder auf den ursprünglichen Wert reduziert. Aufgrund der mit der Erhöhung der Versorgungsspannung einhergehenden Erhöhung der Saugleistung des Saugaggregates 26 bildet sich im Schmutzsammelbehälter 12 immer dann ein erhöhter Unterdruck aus, wenn eine Filterabreinigung durchgeführt wird, wobei die Filterabreinigung zeitgesteuert mittels der Steuereinrichtung 62 erfolgen kann oder auch sensorgesteuert mittels der beiden Drucksensoren 84 und 86 oder auch durch manuelles Betätigen des Tasters 82.

Alternativ kann vorgesehen sein, dass die Versorgungsspannung des Elektromotors 27 über den gesamten Abreinigungsvorgang, also im Zeitintervall zwischen dem Zeitpunkt t₁ und dem Zeitpunkt t_{E}, erhöht bleibt und erst mit dem Ende des Abreinigungsvorgangs wieder abgesenkt wird.

Die Versorgungsspannung des Elektromotors 27 wird zur Filterabreinigung so weit erhöht, dass sich die Saugleistung des Saugaggregates 26 um mindestens 10 %, vorzugsweise um mindestens 30 % erhöht.

Wie bereits erwähnt, erfolgt die Energieversorgung des Staubsaugers 10 mit Hilfe der beiden wiederaufladbaren Batterien 64, 66. Der Energieverbrauch des Staubsaugers 10 kann durch die erfindungsgemäß vorgesehene Veränderung der Saugleistung des Saugaggregates 26 in Abhängigkeit von der Ventilstellung des Femdluftventils 34 verhältnismäßig gering gehalten werden. Der Energieverbrauch des Staubsaugers 10 ist nur dann verhältnismäßig hoch, wenn eine Filterabreinigung durchgeführt wird, da hierzu jeweils die Saugleistung des Saugaggregates vor einem Übergang des Fremdluftventils 34 in die geöffnete Ventilstellung erhöht wird.

Zusätzlich zu einer Energieversorgung mittels der wiederaufladbaren Batterien 66 und 68 kann vorgesehen sein, dass der Staubsauger 10 ein Versorgungskabel 88 aufweist, mit dem der Staubsauger 10 an eine Netzspannung angeschlossen werden kann. Das Vorliegen einer Netzspannung am Versorgungskabel 88 kann von der Steuereinrichtung 62 selbsttätig erkannt werden. Wird der Staubsauger 10 mit Netzspannung versorgt, so kann das Saugaggregat 26 eine gleich bleibende Saugleistung aufweisen, indem die Versorgungsspannung des Elektromotors 27 gleich bleibend auf einem hohen Niveau gehalten wird, indem die Steuereinrichtung 62 dem Hochsetzsteller 76 ein gleich bleibend hohes Eingangssignal bereitstellt. Entfällt die Netzspannung, so erfolgt die Energieversorgung des Staubsaugers 10 mittels der Batterien 64 und 66, wobei bei einem Batteriebetrieb des Staubsaugers 10 die voranstehend erläuterte Veränderung der Saugleistung des Saugaggregates 26 in Abhängigkeit von der Stellung des Fremdluftventils 34 erfolgt.

## Patentansprüche

1. Verfahren zum Abreinigen mindestens eines Filters (22) eines Staubsaugers (10), wobei der Staubsauger (10) einen Saugeinlass (16) und einen Schmutzsammelbehälter (12) aufweist, der über das mindestens eine Filter (22) und eine Absaugleitung (24) mit einem Saugaggregat (26) in Strömungsverbindung steht und vom Saugaggregat (26) mit Unterdruck beaufschlagbar ist, und wobei das mindestens eine Filter (22) zur Abreinigung reinseitig über mindestens ein Fremdluftventil (34) mit Fremdluft beaufschlagbar ist, das sich zur Abreinigung des mindestens einen Filters (22) aus einer geschlossenen Ventilstellung in eine geöffnete Ventilstellung und wieder zurück in die geschlossene Ventilstellung bewegt, **dadurch gekennzeichnet, dass** die Saugleistung des Saugaggregates (26) vor einem Übergang des Fremdluftventils (34) in die geöffnete Ventilstellung erhöht und später wieder reduziert wird.

2. Verfahren nach Anspruch 1, **dadurch gekennzeichnet, dass** die Saugleistung des Saugaggregates (26) vor jedem Übergang des Fremdluftventils (34) in die geöffnete Ventilstellung erhöht und später wieder reduziert wird.

3. Verfahren nach Anspruch 1 oder 2, **dadurch gekennzeichnet, dass** die Saugleistung des Saugaggregates (26) während des Zeitintervalls, in dem das Fremdluftventil (34) offen ist, erhöht bleibt.

4. Verfahren nach einem der voranstehenden Ansprüche, **dadurch gekennzeichnet, dass** die Saugleistung des Saugaggregates (26) frühestens mit einem Übergang des Fremdluftventils (34) in die geschlossene Ventilstellung wieder reduziert wird.

5. Verfahren nach einem der voranstehenden Ansprüche, **dadurch gekennzeichnet, dass** die Saugleistung des Saugaggregates (26) elektronisch gesteuert wird.

6. Verfahren nach einem der voranstehenden Ansprüche, **dadurch gekennzeichnet, dass** die Abreinigung des mindestens einen Filters (22) manuell, zeitabhängig und/oder in Abhängigkeit eines Sensorsignals ausgelöst wird.

7. Verfahren nach einem der voranstehenden Ansprüche, **dadurch gekennzeichnet, dass** dem Saugaggregat (26) zumindest zeitweise Versorgungsenergie aus mindestens einer wiederaufladbaren Batterie (64, 66) bereitgestellt wird.

8. Staubsauger zur Durchführung des Verfahrens nach einem der voranstehenden Ansprüche, mit einem Saugeinlass (16) und einem Schmutzsammelbehälter (12), der über mindestens ein Filter (22) und eine Absaugleitung (24) mit einem Saugaggregat (26) in Strömungsverbindung steht und vom Saugaggregat (26) mit Unterdruck beaufschlagbar ist, wobei das mindestens eine Filter (22) zur Abreinigung reinseitig über mindestens ein Fremdluftventil (34) mit Fremdluft beaufschlagbar ist und wobei das Fremdluftventil (34) zur Abreinigung des mindestens einen Filters (22) aus einer geschlossenen Ventilstellung in eine geöffnete Ventilstellung und wieder zurück in die geschlossene Ventilstellung bewegbar ist, **dadurch gekennzeichnet, dass** die Saugleistung des Saugaggregates (26) vor einem Übergang des Fremdluftventils in die geöffnete Ventilstellung steigerbar und später wieder reduzierbar ist.

9. Staubsauger nach Anspruch 8, **dadurch gekennzeichnet, dass** die Saugleistung des Saugaggregates (26) vor jedem Übergang des Fremdluftventils (34) in die geöffnete Ventilstellung steigerbar und später wieder reduzierbar ist.

10. Staubsauger nach Anspruch 8 oder 9, **dadurch gekennzeichnet, dass** die Saugleistung des Saugaggregates (26) während des Zeitintervalls, in dem sich das Fremdluftventil (34) aus der geschlossenen Ventilstellung über die geöffnete Ventilstellung zurück in die geschlossene Ventilstellung bewegt, erhöht ist.

11. Staubsauger nach Anspruch 8, 9 oder 10, **dadurch gekennzeichnet, dass** die Saugleistung des Saugaggregates (26) frühestens mit einem Übergang des Fremdluftventils (34) in die geschlossene Ventilstellung wieder reduzierbar ist.

12. Staubsauger nach einem der Ansprüche 8 bis 11, **dadurch gekennzeichnet, dass** zur Erhöhung der Saugleistung des Saugaggregates (26) die dem Saugaggregat (26) bereitgestellte Versorgungsenergie steigerbar ist.

13. Staubsauger nach einem der Ansprüche 8 bis 12, **dadurch gekennzeichnet, dass** zur Erhöhung der Saugleistung des Saugaggregates (26) die dem Saugaggregat (26) bereitgestellte Versorgungsspannung steigerbar ist.

14. Staubsauger nach einem der Ansprüche 8 bis 13, **dadurch gekennzeichnet, dass** der Staubsauger (10) eine elektronische Steuereinrichtung (62) zur Steuerung der Saugleistung des Saugaggregates (26) aufweist.

15. Staubsauger nach Anspruch 14, **dadurch gekennzeichnet, dass** die Saugleistung des Saugaggregates (26) von der Steuereinrichtung (62) in Abhängigkeit von der Ventilstellung des Fremdluftventils (34) steuerbar ist.

16. Staubsauger nach einem der Ansprüche 8 bis 15, **dadurch gekennzeichnet, dass** der Staubsauger (10) einen elektronisch steuerbaren Hochsetzsteller (76) aufweist zur Steigerung der Versorgungsspannung des Saugaggregates (26).

17. Staubsauger nach einem der Ansprüche 8 bis 16, **dadurch gekennzeichnet, dass** die Abreinigung des mindestens einen Filters (22) manuell, zeitgesteuert und/oder sensorgesteuert auslösbar ist.

18. Staubsauger nach einem der Ansprüche 8 bis 17, **dadurch gekennzeichnet, dass** der Staubsauger (10) mindestens eine wiederaufladbare Batterie (64, 66) aufweist.

## Claims

1. Method for cleaning at least one filter (22) of a vacuum cleaner (10), wherein the vacuum cleaner (10) comprises a suction inlet (16) and a dirt collection container (12), which is in flow connection with a suction unit (26) via the at least one filter (22) and a suction extraction line (24), and which can be subjected to negative pressure by the suction unit (26), and wherein for cleaning purposes the at least one filter (22) can be acted upon by external air on the clean side via at least one external air valve (34), which moves from a closed valve position to an open valve position and back again into the closed valve position for cleaning the at least one filter (22), **characterized in that** the suction power of the suction unit (26) is increased before transfer of the external air valve (34) to the open valve position and reduced again later.

2. Method in accordance with claim 1, **characterized in that** the suction power of the suction unit (26) is increased before each transfer of the external air valve (34) to the open valve position and reduced again later.

3. Method in accordance with claim 1 or 2, **characterized in that** the suction power of the suction unit (26) remains increased during the time interval in which the external air valve (34) is open.

4. Method in accordance with any one of the preceding claims, **characterized in that** the suction power of the suction unit (26) is reduced again at the earliest when the external air valve (34) transfers to the closed valve position.

5. Method in accordance with any one of the preceding claims, **characterized in that** the suction power of the suction unit (26) is electronically controlled.

6. Method in accordance with any one of the preceding claims, **characterized in that** the cleaning of the least one filter (22) is triggered manually, time-dependently and/or in dependence upon a sensor signal.

7. Method in accordance with any one of the preceding claims, **characterized in that** supply energy from at least one rechargeable battery (64, 66) is provided to the suction unit (26) at least from time to time.

8. Vacuum cleaner for performing the method in accordance with any one of the preceding claims, comprising a suction inlet (16) and a dirt collection container (12), which is in flow connection with a suction unit (26) via at least one filter (22) and a suction extraction line (24), and which can be subjected to negative pressure by the suction unit (26), wherein the at least one filter (22) can be acted upon by external air on the clean side via at least one external air valve (34) for cleaning purposes, and wherein the external air valve (34) is movable from a closed valve position to an open valve position and back again into the closed valve position for cleaning the at least one filter (22), **characterized in that** the suction power of the suction unit (26) is increasable before transfer of the external air valve to the open valve position and reducible again later.

9. Vacuum cleaner in accordance with claim 8, **characterized in that** the suction power of the suction unit (26) is increasable before each transfer of the external air valve (34) to the open valve position and reducible again later.

10. Vacuum cleaner in accordance with claim 8 or 9, **characterized in that** the suction power of the suction unit (26) is increased during the time interval in which the external air valve (34) moves from the closed valve position via the open valve position back into the closed valve position.

11. Vacuum cleaner in accordance with claim 8, 9 or 10, **characterized in that** the suction power of the suction unit (26) is reducible again at the earliest when the external air valve (34) transfers to the closed valve position.

12. Vacuum cleaner in accordance with any one of claims 8 to 11, **characterized in that** the supply energy provided to the suction unit (26) is increasable in order to increase the suction power of the suction unit (26).

13. Vacuum cleaner in accordance with any one of claims 8 to 12, **characterized in that** the supply voltage provided to the suction unit (26) is increasable in order to increase the suction power of the suction unit (26).

14. Vacuum cleaner in accordance with any one of claims 8 to 13, **characterized in that** the vacuum cleaner (10) comprises an electronic control device (62) for controlling the suction power of the suction unit (26).

15. Vacuum cleaner in accordance with claim 14, **characterized in that** the suction power of the suction unit (26) is controllable by the control device (62) in dependence upon the valve position of the external air valve (34).

16. Vacuum cleaner in accordance with any one of claims 8 to 15, **characterized in that** the vacuum cleaner (10) comprises an electronically controllable boost converter (76) for increasing the supply voltage of the suction unit (26).

17. Vacuum cleaner in accordance with any one of claims 8 to 16, **characterized in that** the cleaning of the at least one filter (22) is triggerable manually, in a time-controlled manner and/or in a sensor-controlled manner.

18. Vacuum cleaner in accordance with any one of claims 8 to 17, **characterized in that** the vacuum cleaner (10) comprises at least one rechargeable battery (64, 66).

## Revendications

1. Procédé de nettoyage d'au moins un filtre (22) d'un aspirateur (10), l'aspirateur (10) comportant un orifice d'aspiration (16) et un récipient de collecte de saletés (12), lequel est en liaison fluidique avec un bloc d'aspiration (26) par l'intermédiaire du ou des filtres (22) et d'une conduite d'aspiration (24), et peut être soumis à une dépression par le bloc d'aspiration (26), et le ou les filtres (22) pouvant être soumis, en vue de leur nettoyage, à de l'air frais du côté propre par l'intermédiaire d'au moins une soupape à air frais (34), laquelle se déplace, en vue du nettoyage du ou des filtres (22), d'une position fermée à une position ouverte, avec retour à une position fermée, **caractérisé en ce que** la puissance d'aspiration du bloc d'aspiration (26) est augmentée avant un passage de la soupape à air frais (34) dans la position ouverte, puis à nouveau réduite ultérieurement.

2. Procédé selon la revendication 1, **caractérisé en ce que** la puissance d'aspiration du bloc d'aspiration (26) est augmentée avant chaque passage de la soupape à air frais (34) dans la position ouverte, puis à nouveau réduite ultérieurement.

3. Procédé selon la revendication 1 ou 2, **caractérisé en ce que** la puissance d'aspiration du bloc d'aspiration (26) reste augmentée pendant l'intervalle de temps au cours de laquelle la soupape à air frais (34) est ouverte.

4. Procédé selon l'une quelconque des revendications précédentes, **caractérisé en ce que** la puissance d'aspiration du bloc d'aspiration (26) est à nouveau réduite au plus tôt lors d'un passage de la soupape à air frais (34) dans la position fermée.

5. Procédé selon l'une quelconque des revendications précédentes, **caractérisé en ce que** la puissance d'aspiration du bloc d'aspiration (26) est commandée électroniquement.

6. Procédé selon l'une quelconque des revendications précédentes, **caractérisé en ce que** le nettoyage du ou des filtres (22) est déclenché manuellement, en fonction du temps et/ou en fonction d'un signal de capteur.

7. Procédé selon l'une quelconque des revendications précédentes, **caractérisé en ce qu'**une énergie d'alimentation provenant d'au moins une batterie rechargeable (64, 66) est fournie au moins temporairement au bloc d'aspiration (26).

8. Aspirateur permettant de mettre en oeuvre le procédé selon l'une quelconque des revendications précédentes, pourvu d'un orifice d'aspiration (16) et d'un récipient de collecte de saletés (12), lequel est en liaison fluidique avec un bloc d'aspiration (26) par l'intermédiaire du ou des filtres (22) et d'une conduite d'aspiration (24), et peut être soumis à une dépression par le bloc d'aspiration (26), le ou les filtres (22) pouvant être soumis, en vue de leur nettoyage, à de l'air frais du côté propre par l'intermédiaire d'au moins une soupape à air frais (34) et la soupape à air frais (34), en vue du nettoyage du ou des filtres (22), se déplaçant d'une position fermée à une position ouverte, avec retour à une position fermée, **caractérisé en ce que** la puissance d'aspiration du bloc d'aspiration (26) peut être augmentée avant un passage de la soupape à air frais dans la position ouverte, puis à nouveau réduite ultérieurement.

9. Aspirateur selon la revendication 8, **caractérisé en ce que** la puissance d'aspiration du bloc d'aspiration (26) peut être augmentée avant chaque passage de la soupape à air frais (34) dans la position ouverte, puis à nouveau réduite ultérieurement.

10. Aspirateur selon la revendication 8 ou 9, **caractérisé en ce que** la puissance d'aspiration du bloc d'aspiration (26) est augmentée pendant l'intervalle de temps au cours de laquelle la soupape à air frais (34) part de la position fermée, passe par la position ouverte, et revient à la position fermée.

11. Aspirateur selon la revendication 8, 9 ou 10, **caractérisé en ce que** la puissance d'aspiration du bloc d'aspiration (26) peut être à nouveau réduite au plus tôt lors d'un passage de la soupape à air frais (34) dans la position fermée.

12. Aspirateur selon l'une quelconque des revendications 8 à 11, **caractérisé en ce que** pour l'augmentation de la puissance d'aspiration du bloc d'aspiration (26), l'énergie d'alimentation fournie au bloc d'aspiration (26) peut être augmentée.

13. Aspirateur selon l'une quelconque des revendications 8 à 12, **caractérisé en ce que** pour l'augmentation de la puissance d'aspiration du bloc d'aspiration (26), la tension d'alimentation fournie au bloc d'aspiration (26) peut être augmentée.

14. Aspirateur selon l'une quelconque des revendications 8 à 13, **caractérisé en ce que** l'aspirateur (10) comprend un dispositif de commande électronique (62) permettant de commander la puissance d'aspiration du bloc d'aspiration (26).

15. Aspirateur selon la revendication 14, **caractérisé en ce que** la puissance d'aspiration du bloc d'aspiration (26) peut être commandée par le dispositif de commande (62) en fonction de la position de la soupape à air frais (34).

16. Aspirateur selon l'une quelconque des revendications 8 à 15, **caractérisé en ce que** l'aspirateur (10) comprend un convertisseur-élévateur (76) pouvant être commandé de manière électronique et permettant d'augmenter la tension d'alimentation du bloc d'aspiration (26).

17. Aspirateur selon l'une quelconque des revendications 8 à 16, **caractérisé en ce que** le nettoyage du ou des filtres (22) peut être déclenché manuellement, en fonction du temps et/ou en étant commandé par un capteur.

18. Aspirateur selon l'une quelconque des revendications 8 à 17, **caractérisé en ce que** l'aspirateur (10) comprend au moins une batterie rechargeable (64, 66).
